Europäisches Patentamt

(19) European Patent Office

Office européen des brevets

(11) Numéro de publication: **0 225 250**
**B1**

(12) **FASCICULE DE BREVET EUROPEEN**

(45) Date de publication du fascicule du brevet:
**31.05.89**

(21) Numéro de dépôt: **86402576.2**

(22) Date de dépôt: **20.11.86**

(51) Int. Cl.⁴: **F03D 1/06, B64C 27/35**

(54) **Moyeu en balancier pour rotor bi-pale.**

(30) Priorité: **21.11.85 FR 8517229**

(43) Date de publication de la demande:
**10.06.87 Bulletin 87/24**

(45) Mention de la délivrance du brevet:
**31.05.89 Bulletin 89/22**

(84) Etats contractants désignés:
**DE GB NL SE**

(56) Documents cités:
**DE-A- 3 113 080**
**FR-A- 2 305 343**

(73) Titulaire: **AEROSPATIALE SOCIETE NATIONALE INDUSTRIELLE, 37, Boulevard de Montmorency, F-75781 Paris Cédex 16(FR)**

(72) Inventeur: **Coffy, René Louis, 13, rue des Lanciers, F-13960 Sausset-Les-Pins(FR)**

(74) Mandataire: **Lepeudry-Gautherat, Thérèse et al, ARMENGAUD JEUNE CABINET LEPEUDRY 6, rue du Fg. St-Honoré, F-75008 Paris(FR)**

## Description

L'invention concerne un moyeu bi-pale en balancier destiné à une éolienne ou encore à un rotor sustentateur et/ou à un rotor anti-couple d'hélicoptère.

Elle se rapporte plus précisément au fléau servant de support aux deux pales associé au palier du balancier et aux paliers d'indicence et de reprise des efforts centrifuges de chaque pale sur le fléau.

On sait que les éoliennes utilisent l'énergie produite par le vent pour entraîner un générateur électrique ou pour manoeuvrer mécaniquement un organe moteur par exemple une pompe. L'organe essentiel de ces éoliennes est constitué par un rotor dont le nombre de pales peut varier selon les utilisations recherchées. Le type de rotor à deux pales est plus léger et a trouvé des applications préférentielles pour réaliser des aérogénérateurs électriques de diverses puissances. Ces rotors doivent pouvoir trouner à des vitesses variables et l'angle d'incidence des pales par rapport au vent doit être réglable pour fonctionner avec un rendement maximal quelle que soit la vitesse du vent. Il faut aussi prévoir une position de mise en drapeau des pales pour rendre le fonctionnement de l'éolienne inopérant en cas de nécessité. Toutes ces contraintes et servitudes de fonctionnement imposent un matériel robuste et fiable, plus particulièrement au niveau du support des pales ainsi que du moyeu auquel elles sont rattachées. Le problème se pose avec d'autant plus d'acuité que l'éolienne est de grande dimension car les efforts centrifuges et les moments de flexion sur les pales et le moyeu dans le cas d'un vent maximum, sont extrêmement importants.

Pour ce type d'éolienne de grande dimension, afin d'obtenir un bon rendement tout en limitant le poids du rotor, le rotor de type bi-pale en balancier constitue une solution intéressante. On sait que dans ce type de rotor chaque pale est généralement supportée par un corps de moyeu monté à cardan sur l'arbre tournant pour que le balancement d'une pale par rapport à l'arbre soit compensé par un balancement inverse de l'autre pale, et que, dans les rafales, le disque rotor prenne ainsi une position d'équilibre naturel, ce qui réduit notablement les mouvements d'encastrement du moyeu sur le mât-support.

On connaît également des rotors sustentateurs et des rotors arrière anti-couples d'hélicoptères de type bi-pale en balancier dont le principe de fonctionnement est sensiblement le même que celui du rotor d'une éolienne bi-pale en balancier. Dans une forme particulière de réalisation de tels rotors en balancier, chacune des deux pales est fixée sur l'extrémité d'une même armature ou fléau dont la partie centrale est prise dans un étrier lui-même solidaire d'un arbre tournant formant mât-support. D'une façon générale ces organes de fixation intermédiaire entre pale et moyeu, doivent transmettre et absorber les efforts centrifuges dus à la rotation et les moments de flexion résultant des efforts aérodynamiques sur les pales. Les paliers à friction métal sur métal utilisés couramment s'usent rapidement et sont insuffisamment endurants pour les utilisations mentionnées précédemment. D'autre part, les paliers à roulements à billes ou à rouleaux ne conviennent pas non plus, car malgré une bonne lubrification à l'huile ou à la graisse ils se détériorent rapidement par "brinellage" en raison de la force centrifuge importante qui les sollicite et du fait qu'ils ne tournent pas, mais oscillent sur le même secteur angulaire réduit.

D'autres dispositifs connus de fixation de pales à un moyeu utilisent plutôt un support pouvant recevoir des paliers élastomériques de butée radiale comportant des couches de forme tronconique adhérant entre elles et alternativement métalliques et élastiques qui convergent en direction de la pale. On sait que ces types de paliers élastomériques lamifiés caractérisés par une grande souplesse et déformabilité en cisaillement, ainsi que par une faible déformation en compression assurent une bonne endurance en service et une bonne sécurité de fonctionnement du fait de la progression lente et visible des dégradations subies et permettent par suppression de toute lubrification une réduction très importante des coûts de maintenance en service.

Pour résoudre les problèmes qui se posent ainsi lors de la conception d'un rotor bi-pale en balancier d'éolienne, ou d'hélicoptère, et pour éviter par conséquent les inconvénients précités, l'invention propose un nouveau moyeu bi-pale en balancier dans lequel les eforts centrifuges et de flexion subis par les pales sont transmis audit moyeu par un fléau tubulaire de conception particulière et une nouvelle disposition des paliers élastomériques lamifiés qui lui sont associés pour la fixation des pales et pour l'articulation du balancier.

Selon une caractéristique principale de l'invention le fléau est un tube de forme évolutive dont la section est cylindrique à son extrémité du côté de la pale et progressivement elliptique jusqu'à sa partie centrale de raccordement au moyeu.

Cette structure permet notamment et d'une part de conférer au fléau une grande rigidité de flexion et de torsion et d'autre part d'assurer la commande du pas des pales, y compris dans le cas de l'éolienne où elle permet leur mise en drapeau en position de sauvegarde par une variation de pas de l'ordre de 90°.

Selon une autre caractéristique de l'invention ledit fléau de forme évolutive est relié à son étrier support par des paliers élastomériques lamifiés de géométrie identique aux paliers élastomériques lamifiés d'incidence et de reprise des efforts centrifuges qui, d'une part assurent la liaison entre le fléau et la pale et d'autre part permettent la commande de pas.

D'autres caractéristiques particulières et avantages de l'invention apparaîtront à la lecture de la description qui va suivre d'une forme de réalisation prise à titre d'exemple non limitatif et en référence aux dessins annexés qui représentent :

la figure 1 - une vue partielle en coupe d'un moyeu bi-pale de rotor d'éolienne, selon l'invention ;
la figure 2 - une vue selon AA' de la figure 1;
la figure 3 - une vue de côté selon BB' de la figure 1 ;

la figure 4 - une vue schématique partielle en coupe transversale du fléau selon l'axe II' de la figure 1;

la figure 5 - une vue montrant différentes sections du fléau selon les lignes DD' à HH' de la figure 4.

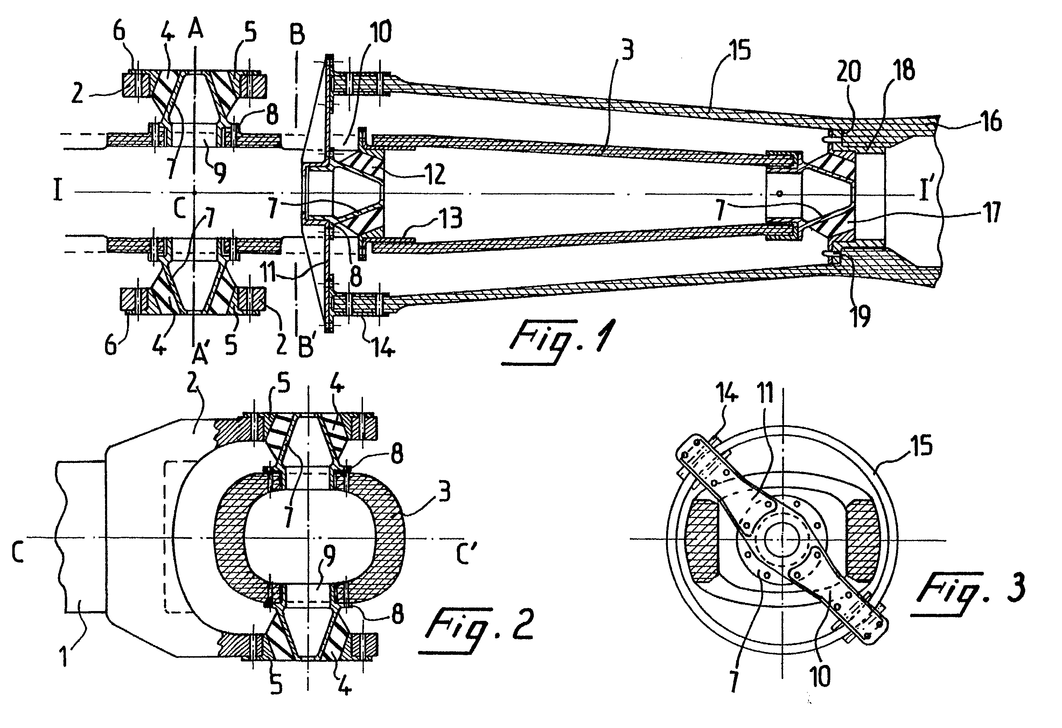

On a représenté aux figures 1 à 3 la structure d'un moyeu bi-pale à axe de rotation horizontal. (Cas de l'éolienne et du rotor arrière anti-couple de l'hélicoptère).

L'arbre 1 du rotor visible à la figure 2 matérialise l'axe de rotation CC'. Il est solidaire d'un étrier 2 qui supporte un fléau 3 par l'intermédiaire de deux butées de balancier 4. Le fléau est un tube en matériau composite dont la forme est variable entre chacune de ses extrémités et sa partie centrale au niveau des butées de balancier 4.

Chacune de ces butées comporte entre une armature externe 5 et une armature interne 7 une pluralité de coupelles métalliques tronconiques entre lesquelles sont disposées des couches d'élastomère ou de caoutchouc adhérisées aux coupelles et aux armatures.

L'armature externe 5 est en appui sur la chape de l'étrier 2 et fixée sur celui-ci par un rebord circulaire 6.

L'armature interne 7 comporte une base cylindrique ouverte et munie d'un épaulement circulaire 8.

Le fléau 3 est percé en son milieu, perpendiculairement à l'axe de rotation du moyeu, de deux ouvertures 9 se faisant face dans laquelle vient se placer la base cylindrique de l'armature 7. L'épaulement circulaire 8 de celle-i se trouve alors en appui sur la face extérieure du fléau. Des alésages prévus dans ces épaulements permettent la fixation de l'armature 7 au fléau par une couronne de boulons. Deux autres ouvertures 10 se faisant face sont également prévues dans le fléau 3 de part et d'autre du moyeu central. Elles permettent le passage d'une ferrure d'emplanture et de commande de pas 11 reliée au fléau par l'intermédiaire d'une butée élastomérique lamifiée 12 d'incidence et de reprise des efforts centrifuges.

Cette butée élastomérique lamifiée est de forme également tronconique et son armature interne constitue une ferrure de liaison 7 de même forme et de même dimension que l'armature supportant le palier de balancier 4.

L'épaulement 8 de cette ferrure de liaison 7 vient en appui contre la ferrure d'emplanture et de commande de pas 11 et les alésages dont il est muni permettent de fixer entre elles ces deux pièces par boulonnage. L'armature externe de la butée 12 est en appui et boulonnée sur un manchon 13 engagé à l'intérieur du fléau 3 et solidarisé avec ce dernier.

Aux deux extrémités de la ferrure d'emplanture 11 sont fixées des cornières 14 dans lesquelles est maintenue l'extrémité d'une manchette 15 qui est une partie intégrante de la pale 16 dont elle constitue le prolongement. Cette manchette 15 de forme sensiblement cylindrique enveloppe le fléau 3. La pale au niveau du bout de la manchette est en appui sur l'extrémité du fléau 3 par l'intermédiaire d'une butée élastomérique lamifiée constituant un palier d'indicence 17.

L'armature interne de cette butée forme une ferrure de liaison 7 également du même type que celle précédemment décrite dont la base est emmanchée dans l'extrémité du fléau. Une douille 18 centrée sur cette pièce est en appui sur l'armature externe de la butée 17.

La douille 18 s'appuie sur la manchette 15 par un épaulement 20. Le centrage s'effectue grâce à des pions de positionnement 19 au niveau de l'épaulement 20 qui empêchent la rotation des deux parties.

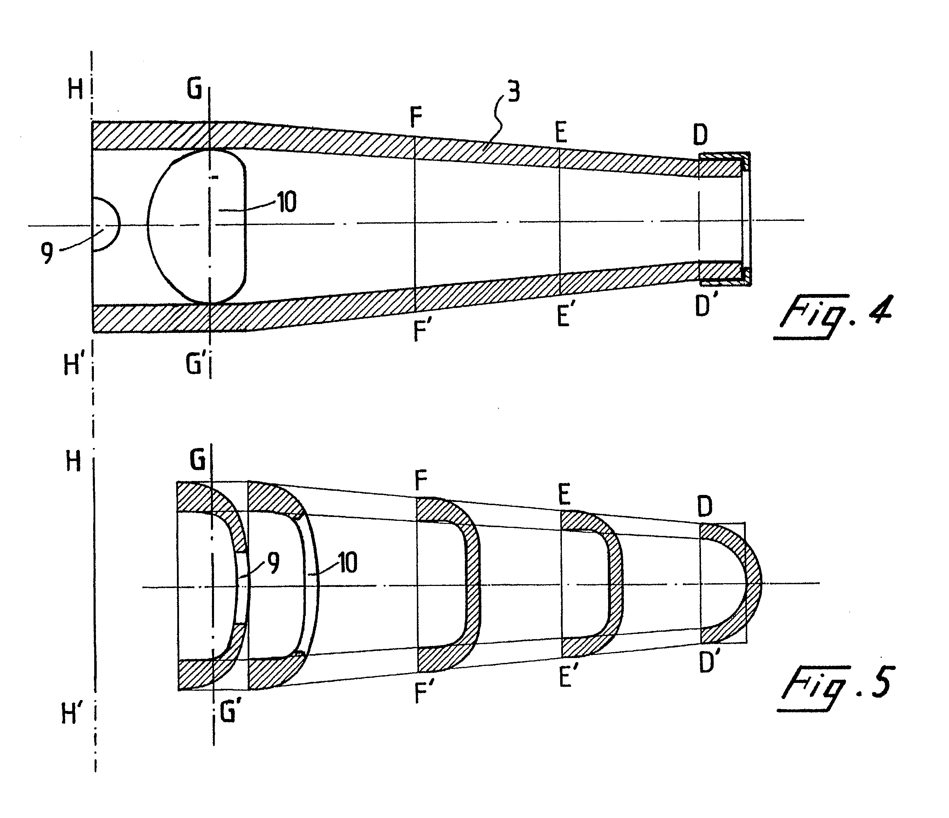

La figure 5 montre différentes sections du fléau 3 selon les lignes DD' à HH' de la figure 4. D'une section circulaire à l'extrémité à droite de ces figures (ligne DD') au niveau de la liaison avec la pale par l'intermédiaire de la butée 17, le fléau a une section évolutive progressivement elliptique jusqu'à la section GG' ; à partir de la section HH' jusqu'à la section équivalente de l'autre côté du corps de moyeu, la section elliptique reste constante. Elle comporte deux ouvertures opposées 10 de forme sensiblement ovoïdale pour le passage de la ferrure d'emplanture et de commande 11 ainsi que deux alésages circulaires sur la section HH' pour le logement et l'appui des armatures 5 des butées lamifiées constituant l'articulation du balancier.

Ce nouveau concept de fléau permet de conférer à ce dernier une grande rigidité et ainsi, dans le cas de l'éolienne, de limiter la flèche en bout des pales. Elle permet également le passage des organes pour la mise en drapeau des pales en position de sauvegarde par une rotation de 90° de leur angle de pas.

Le fléau est réalisé par bobinage ce qui permet une fabrication automatisée. Il peut être aussi réalisé par drapage, mais cette fabrication est plus complexe du fait du nombre de tissus à découper, à draper et à compacter. La matière utilisée est avantageusement un matériau composite tel que du verre imprégné de résine époxy. Pour la solution bobinée, l'imprégnation des fils de verre peut être faite sur le site, par contre pour la solution drapée on préférera utiliser des tissus de verre préimprégnés de fort grammage. Les trous 9 et 10 sont usinés après polymérisation à chaud du fléau.

La disposition telle que décrite permet d'utiliser des butées élastomériques lamifiées de géomé trie identique qui comportent en particulier les mêmes armatures externes, que ce soit au niveau de paliers de balancier 4 qu'à celui des paliers d'emplanture et d'incidence 12 et 17, ce qui représente une réduction très sensible du coût de développement. Etant de forme conique, lesdits paliers encaissent sans déformations importantes les importants efforts axiaux et radiaux qui leur sont appliqués, tout en autorisant une plage de rotation de plus de 90° sans efforts de commande exagérés. On notera que la configuration du fléau permet d'y loger intérieurement les paliers d'emplanture et d'incidence 12 et 17.

**Revendications**

1.- Moyeu de rotor du type bi-pale en balancier, comportant un mât-support dont une extrémité forme un étrier sur lequel, perpendiculairement à l'axe du mât-support, est articulé un fléau dont chaque bras supporte et retient à l'encontre de la force centrifuge une pale articulée suivant son axe longitudinal par l'intermédiaire de deux organes d'appui et de rotation, caractérisé en ce que le fléau (3) est tubulaire du type bi-conique de forme évolutive et en ce que les deux organes constituant le palier d'articulation (4) du fléau sur l'étrier (2) et les deux organes (12) et (17) d'appui, de rotation et de retenue à l'encontre de la force centrifuge de chaque pale (16) sur le bras correspondant du fléau sont des butées élastomériques lamifiées coniques de géométrie identique.

2.- Moyeu bi-pale selon la revendication 1, caractérisé en ce que le fléau tubulaire de forme évolutive a une section cylindrique à son extrémité du côté de la pale (16) et progressivement elliptique vers sa zone centrale.

3.- Moyeu bi-pale selon la revendication 1, caractérisé en ce que les six butées élastomériques lamifiées coniques (4), (12) et (17) ont chacune une armature interne (7) de forme extérieure tronconique dont la base cylindrique est ouverte et munie d'un épaulement circulaire (8) et une armature externe (5) comportant à sa base un rebord circulaire d'appui et de fixation (6).

4.- Moyeu bi-pale selon les revendications 1 et 2, caractérisé en ce que le fléau (3) est percé en son milieu perpendiculairement à l'axe de rotation du moyeu, de deux alésages circulaires se faisant face, dans chacun desquels vient se placer et se fixer par une couronne de boulons, la base cylindrique de l'armature interne (7) de chacune des deux butées élastomériques lamifiées coniques et en ce que l'armature externe (5) de chacune de ces butées (4) est fixée dans des alésages correspondants de l'étrier (2) par le rebord circulaire d'appui et de fixation (6).

5.- Moyeu bi-pale selon la revendication 1, caractérisé en ce que l'armature externe (5) de la butée élastomérique lamifiée conique (12) est en appui par son rebord circulaire (6) sur un manchon (13) engagé à l'intérieur du fléau (3).

6.- Moyeu bi-pale selon la revendication 1, caractérisé en ce que la ferrure d'emplanture et de commande est fixée sur l'extrémité d'une manchette (15) venant dans le prolongement de la pale (16) du côté du centre du fléau.

7.- Moyeu bi-pale selon la revendication 1, caractérisé en ce qu'une butée élastomérique lamifiée conique (17) assure la liaison entre une extrémité du fléau (3) et l'extrémité de la manchette (15) au départ de la pale (16).

8.- Moyeu bi-pale selon la revendication 7, caractérisé en ce que l'armature externe de la butée élastomérique lamifiée conique (17) est en appui par son rebord circulaire (6) sur une douille (18) centrée sur la structure résistante de la pale (16) et solidarisée avec celle-ci.

9.- Moyeu bi-pale selon la revendication 8, caractérisé en ce que des pions de positionnement (19) au niveau de l'épaulement (20) de la douille (18) engagés dans des alésages correspondants pratiqués dans le rebord circulaire (6) de l'armature interne (5) de la butée élastomérique lamifiée conique (17) permettent d'entraîner en rotation ladite armature par la structure résistante de la pale (16) et la douille (18).

10.- Moyeu bi-pale selon la revendication 1, caractérisé en ce que le fléau (3) est réalisé en matériau composite de fibres à haute résistance agglomérées par une résine synthétique par bobinage de fibres élémentaires ou de rubans ou par drapage de couches de tissus sur un mandrin démontable.

11.- Rotor d'éolienne, caractérisé par un moyeu bi-pale en balancier selon les revendications 1 à 10.

12.- Rotor sustentateur ou anti-couple d'hélicoptère, caractérisé par un moyeu bi-pale en balancier selon les revendications 1 à 10.

**Patentansprüche**

1. Elastische Nabe für einen zweiflügeligen Rotor, enthaltend einen Tragmast, von dem ein Ende einen Bügel bildet, an dem senkrecht zur Achse des Tragmastes ein Waagebalken angelenkt ist, von dem jeder Schenkel gegen die Zentrifugalkraft einen Flügel trägt und hält, der in seiner Längsachse mittels zweier Anschlag- und Drehorgane angelenkt ist, dadurch gekennzeichnet, daß der Waagebalken (3) ein doppelkonischer Tubus von sich erweiternder Gestalt ist, und daß die zwei Organe die das Gelenklager (4) des Waagebalkens an dem Bügel (2) bilden, und die zwei Anschlag-, Dreh- und Halteorgane (12 und 17) gegen die Zentrifugalkraft eines jeden Flügels an dem entsprechenden Arm des Waagebalkens, elastomere Lagerelemente von identischer Geometrie sind, die konisch geschichtet sind.

2. Zweiflügelige Nabe nach Anspruch 1, dadurch gekennzeichnet, daß der tubusförmige Waagebalken von sich erweiternder Gestalt einen zylindrischen Querschnitt an seinem auf der Seite des Flügels (16) gelegenen Ende hat und gegen seine Mittenzone zu zunehmend elliptisch wird.

3. Zweiflügelige Nabe nach Anspruch 1, dadurch gekennzeichnet, daß die sechs elastomeren Lagerelemente (4, 12 und 17), die konisch geschichtet sind, jeweils eine innere Armierung (7) von äußerer kegelstumpfförmiger Gestalt aufweisen, von der die zylindrische Basis offen ist und mit einer kreisförmigen Schulter (8) versehen ist, und eine äußere Bewehrung (5) aufweisen, die an ihrer Basis einen kreisförmigen Anlage- und Befestigungsflansch (6) aufweist.

4. Zweiflügelige Nabe nach den Ansprüchen 1 und 2, dadurch gekennzeichnet, daß der Waagebalken (3) in seiner Mitte senkrecht zur Drehachse der Nabe von zwei kreisförmigen Löchern durchbrochen ist, die sich einander gegenüberstehen, wobei in jedem derselben die zylindrische Basis der inneren Armierung (7) eines jeden der zwei elastomeren, konisch geschichteten Lagerelemente angeordnet und durch eine Krone von Schraubbolzen befestigt ist, und daß die äußere Armierung (5) eines jeden dieser Lagerelemente (4) in entsprechenden Löchern des Bügels (2) durch den ringförmigen Anschlag- und Befestigungsflansch (6) befestigt ist.

5. Zweiflügelige Nabe nach Anspruch 1, dadurch gekennzeichnet, daß die äußere Armierung (5) des elastomeren, konisch geschichteten Lagerelements (12) durch seinen ringförmigen Flansch (6) an einer Manschette (13) anliegt, die im Innern des Waagebalkens (3) befestigt ist.

6. Zweiflügelige Nabe nach Anspruch 1, dadurch gekennzeichnet, daß der Wurzel- und Steuerbeschlag am Ende einer Manschette (15) befestigt ist, die in Verlängerung des Flügels (16) auf der Seite der Mitte des Waagebalkens verläuft.

7. Zweiflügelige Nabe nach Anspruch 1, dadurch gekennzeichnet, daß ein elastomeres, konisch geschichtetes Lagerelement (17) die Verbindung zwischen einem Ende des Waagebalkens (3) und dem Ende der Manschette (15) ab dem Flügel (16) sicherstellt.

8. Zweiflügelige Nabe nach Anspruch 7, dadurch gekennzeichnet, daß die äußere Armierung des elastischen, konisch geschichteten Lagerelements (17) mit seinem kreisförmigen Flansch (6) auf einer Hülse (18) sitzt, die auf die widerstandsfähige Struktur des Flügels (16) zentriert ist und mit dieser fest verbunden ist.

9. Zweiflügelige Nabe nach Anspruch 8, dadurch gekennzeichnet, daß Positionierteile (19) in Höhe der Schulter (20) der Hülse (18), die in den entsprechenden Löchern sitzen, die in dem Umfangsflansch (6) der inneren Armierung (5) des elastomeren, konisch geschichteten Lagerelements (17) ausgebildet sind, es ermöglichen, die genannte Armierung durch die widerstandsfähige Struktur des Flügels (16) und die Hülse (18) in Drehung mitzunehmen.

10. Zweiflügelige Nabe nach Anspruch 1, dadurch gekennzeichnet, daß der Waagebalken (3) aus einem zusammengesetzten Material aus Fasern hoher Widerstandsfähigkeit besteht, die miteinander durch ein Kunstharz, durch Wickeln von Elementarfäden oder Bändern oder durch Aufbringen von Gewebsschichten auf einen demontierbaren Dorn zusammengehalten sind.

11. Windrotor, gekennzeichnet durch eine zweiflügelige ausgeglichene Nabe nach den Ansprüchen 1 bis 10.

12. Tragrotor oder Gegendrehmomentrotor eines Hubschraubers, gekennzeichnet durch eine zweiflügelige ausgeglichene Nabe nach den Ansprüchen 1 bis 10.

**Claims**

1. Two-bladed type rotor hub with a resilient mounting, comprising a shaft of which one end forms a stirrup on which there is articulated, at right angles to the axis of the shaft, a balance arm of which each limb supports and retains against centrifugal force an articulated blade along its longitudinal axis via the intermediary of two elements of support and rotation, characterised in that the balance arm (3) is of the biconical tubular type of evolutive shape, and in that the two elements constituting the articulation bearing (4) of the balance arm on the stirrup (2), and the two elements (12) and (17) of support, rotation and retention against the centrifugal force of each blade (16) on the corresponding limb of the balance arm, are conical laminated elastomeric bearings of identical geometry.

2. Two-bladed hub according to claim 1, characterised in that the tubular balance arm of evolutive shape is of cylindrical cross-section at the end nearer the blade (16) and progressively elliptical in cross-section towards its central zone.

3. Two-bladed hub according to claim 1, characterised in that the six conical laminated elastomeric bearings (4), (12) and (17) each have an internal mounting (7) of frusto-conical external shape, of which the cylindrical base is open and fitted with a circular shoulder (8), and an external mounting (5) comprising in its base a circular flange for support and mounting (6).

4. Two-bladed hub according to claims 1 and 2, characterised in that the balance arm (3) is pierced at the centre, at right angles to the axis of rotation of the hub, by two circular bores opposite to each other, in each of which there are seated and fixed by way of a ring of bolts the cylindrical base of the internal mounting (7) of each of the two conical laminated elastomeric bearings, and in that the external mounting (5) of each of these bearings (4) is fixed in corresponding bores in the stirrup (2) by the circular flange for support and mounting (6).

5. Two-bladed hub according to claim 1, characterised in that the external mounting (5) of the conical laminated elastomeric bearing (12) is supported by its circular flange (6) against a sleeve (13) engaged inside the balance arm (3).

6. Two-bladed hub according to claim 1, characterised in that the root and control fitting is fixed on the end of a sleeve (15) forming an extension of the blade (16) at one side of the centre of the balance arm.

7. Two-bladed hub according to claim 1, characterised in that a conical laminated elastomeric bearing (17) ensures the connection between one end of the balance arm (3) and the end of the sleeve (15) at the beginning of the blade (16).

8. Two-bladed hub according to claim 7, characterised in that the external mounting of the conical laminated elastomeric bearing (17) is supported by its circular flange (6) against a bush (18) centred on the rigid structure of the blade (16) and integral therewith.

9. Two-bladed hub according to claim 5, characterised in that positioning elements (19) in the region of the shoulder (20) of the bush (18) engaged in corresponding bores made in the circular flange (6) of the internal mounting (5) of the conical laminated elastomeric bearing (17) permit the said mounting to be rotated by the rigid structure of the blade (16) and the bush (18).

10. Two-bladed hub according to claim 1, characterised in that the balance arm (3) is made of a composite material of high strength fibres bound by a synthetic resin by winding elementary fibres or ribbons or by laying-up layers of fabric on a collapsible mandrel.

11. Rotor of a wind power machine, characterised by a two-bladed hub with a resilient mounting according to claims 1 to 10.

12. Supporting or auxiliary rotor of a helicopter, characterised by a two-bladed hub with a resilient mounting according to claims 1 to 10.

*Fig. 1*

*Fig. 2*

*Fig. 3*

EP 0 225 250 B1

Fig. 4

Fig. 5